# EUROPEAN PATENT SPECIFICATION

(11) **EP 4 463 009 B1**
(45) Date of publication and mention of the grant of the patent: **24.09.2025**
(21) Application number: 23700763.8
(22) Date of filing: 12.01.2023
(51) Int. Cl.: A23K 10/26, B09B 3/00, B09B 3/30, B09B 3/40, C10G 3/00, C11B 1/00, C11B 1/02

(54) **METHOD OF OBTAINING FAT FROM ANIMAL BY-PRODUCTS**
VERFAHREN ZUR GEWINNUNG VON FETT AUS TIERISCHEN NEBENPRODUKTEN
PROCÉDÉ D'OBTENTION DE GRAISSE À PARTIR DE SOUS-PRODUITS ANIMAUX

(30) Priority: 12.01.2022 EP 22151225
(43) Date of publication of application: 20.11.2024
(73) Proprietor: Saria International GmbH, 59379 Selm (DE)
(72) Inventor: ALTHAUS, Burkhard Gerhard, 59379 SELM (DE); DÖNGES, Christopher, 59379 SELM (DE); COLOMER, Daniel, 59379 SELM (DE)
(74) Representative: EP&C
(86) International application number: PCT/EP2023/050580
(87) International publication number: WO 2023/135185

(56) References cited:
- EP-A1- 2 612 558
- DE-A1- 3 933 479
- GB-A- 2 106 367
- US-A- 3 804 964
- US-A1- 2019 338 219

## Description

### FIELD OF THE INVENTION

The present invention relates to a method for obtaining fat from animal by-products and use of products obtained by the method.

### BACKGROUND OF THE INVENTION

Millions of tons of animal by-products emerge yearly. These animal by-products include entire bodies of animals or parts thereof, such as carcasses of slaughtered animals, or other products of animal origin which are not intended for human consumption. These animal by-products can spread animal diseases (e.g., BSE) or chemical contaminants and can thus be dangerous to animal or human health if not properly processed. The by-products are categorized in Category 1, 2 or 3, according to EU Regulation (EC) No. 1069/2009 depending on their assigned potential risk. Based on the material category, these animal by-products are either incinerated or re-used in e.g. feed, fuel or fertilizer. Re-use of the animal by-products requires treatment to isolate and separate useful components which can be further treated to obtain commercial products.

Groups of useful components in raw materials of animal origin are the proteins as well as oils and fats. Despite of their material category, oils and fats can be used for logical reasons as feedstock, e.g. to produce biodiesel. Especially for Category 1 material, normally meant for incineration, using the fat from animal waste is an interesting way to valorize a component that would otherwise be disposed of. Moreover, animal fat is more sustainable in ecological as well as economic terms compared to the use of edible oils, which is the alternative feedstock for biodiesel production.

Unfortunately, the separated fat from the animal waste often comprises high amounts of contaminants, such as free fatty acid (FFA), which can reduce the quality and yield of biodiesel production. High FFA contents can cause saponification reactions during use of the biodiesel, making the use of oils with high FFA contents difficult. Obtaining high quality fat with a low FFA content is thus beneficial for applications such as biodiesel.

Conventional methods for fat extraction from animal by-products include dry rendering and wet rendering. During dry rendering, a feed stock of animal by-product is crushed and/or comminuted, and afterwards sterilized. The sterilized feed stock is then dried, and the fat is separated by pressing, obtaining a fat yield of less than 85% with a high FFA content. Moreover, dry rendering is generally energy inefficient, especially if heat is not recovered. Wet rendering is performed by optionally adding water to a feed stock, and subsequently heating the feed stock of animal by-product to relatively low temperatures, such as 90° C, followed by pressing to separate the solid from the liquid phase. After further treatment of the liquid phase, a separated fat fraction is obtained. The fat stream has an improved fat yield and lower FFA content compared to the fat stream obtained by dry rendering, but improvements are still required for optimal use as e.g. to produce biodiesel.

An alternative process for the separation of fat from animal by-products is disclosed in GB917638. GB917638 discloses a two-stage process of separating fat from animal by-products comprising the steps of pre-crushing solid oil-bearing animal by-products, heating the crushed by-products in a first heat-exchanger, passing the material through a disintegrator for further reduction of the material, heating the by-products in a second heat exchanger and passing the material through a press. Sterilization is optional as a last step. In the heat exchangers, the temperature to which the animal by-products are heated is below 100 °C. The process results in a fat yield of 94%.

A drawback of the process according to GB917638 is the low efficiency: the process requires two heat exchangers, preferably two presses and optionally a sterilizer to obtain a fat yield of only 94%, hence leaving 6% of the total amount of fat and oils in the remaining phases.

EP2612558 discloses a method of crushing the animal by-products with a dry matter content of preferably 35% to fragments of a size of 20 mm followed by sterilization and three phase separation of the obtained three phase system, comprising a fat phase, an aqueous protein hydrolysate phase and a sediment phase. The fat yield after the three-phase separation is 88-93%, consequently leaving 7-12% of fat in the leftover aqueous protein hydrolysate and sediment phases.

GB2106367 A discloses a process for the production of fat and meal from animal raw material. The process includes comminution of the raw material to a maximum size of 2 cm, after which the raw material is heated to 50-60°C. The heated material is pressed in a screw press to separate a liquid phase consisting of an aqueous phase and fat the press cake. The aqueous phase aqueous phase is then separated from the fat and added to the press cake. The press cake obtained is dried and sterilized before being comminuted to feed meal.

A disadvantage thereof is that screw pressing of the animal raw material leaves a large part of the fat within the tissues of the raw material. Only moderate to low fat yields are therefore obtained. Moreover, the process as disclosed in GB2106367 is only suitable for the processing of low-risk animal raw material.

DE3933479 A1 discloses a process for producing aseptic end products from animal raw material. The raw material is heated continuously by applying heat under pressure in a stirrer pressure pre-cooker. Fat-containing liquids resulting from the pressure pre-cooker are separated during cooking. The remaining degreased animal products and the separated fat-containing liquids are then sterilized and further treated.

A disadvantage thereof is that the purchase of new equipment is required to perform such a process. In addition, a part of the fat will remain in the tissue that is in the pressure pre-cooker, thereby lowering the fat yield that is obtained.

US3804964 discloses a process for the production of a high protein material from fish. Fresh fish is first cut into pieces after which the pieces are washed in a counter-current washer until most of the blood is removed. Then the pieces are subjected to a second washing step in a rotatable drum to separate the viscera from the fish pieces. Afterwards, the pieces are boiled in a direct-steam boiler to a temperature of about 92-95°C and the harder undesirable parts of the fish (bones, gills, eyes and gut fragments) are separated. The leftover soft fish material is then comminuted, after which melanin pigment and an aqueous phase containing stick water and fat is separated and discarded. The fish material is the subjected to a second homogenization and separation step to remove the remaining melanin pigment, fat, water soluble compounds and water are removed.

A disadvantage thereof is that the process is highly inefficient. The process requires an exorbitantly high consumption of water and energy because of the multiple washing, heating, comminution and separation steps. In times of energy and water scarcity, such a process cannot be applied. Moreover, for obtaining the fat from the discarded phases, additional separation steps would be required.

Hence, prior art methods for extracting fat from animal by-products have drawbacks in their efficiency of fat removal, such as low fat yields.

### OBJECT OF THE INVENTION

The present invention aims to overcome one or more of the above disadvantages at least partly or to provide a suitable alternative method.

In particular, the present invention aims at providing a method of separating fat from animal by-products with a higher fat yield.

Another object is to provide a method of separating fat with a lower FFA content.

### DETAILED DESCRIPTION OF THE INVENTION

The present invention relates to a method for the separation of fat from animal by-products, comprising
a supply step a) of providing a feed stock of animal by-products,
a crushing step of crushing the feed stock to obtain feed stock fragments with a size of 50 mm or less;
a treatment step b) of sterilizing the crushed feed stock, wherein the feed stock has a dry matter content of 20-40% and wherein, during sterilization, the internal temperature of the feed stock fragments reaches a minimum of 95 °C;
a comminution step c) of comminuting the sterilized feed stock, wherein the feed stock is reduced in size to obtain fragments with a size of 10 mm or less, and wherein a three-phase system, comprising a fat phase, an aqueous protein phase and a solid phase, is obtained, and
a separation step d) of separating the fat phase from the three-phase system obtained in comminution step c).

The method according to the invention comprises a treatment step, such as a heat treatment step, in which a feed stock of animal by-products, such as entire bodies of animals or parts thereof, products of animal origin or other products obtained from animals, is heated to for example 100°C, such as 105°C, 110°C, 115°C, 120°C, 125°C or 130°C. The treatment step is a sterilization step in which the feed stock is sterilized. During heat treatment of the feed stock the core temperature of feed stock fragments reaches a minimum temperature of 95°C. Heat treatment may also encompass a combination of increased temperature and pressure or can also be performed as sterilization according to EU regulation (EC) No. 1069/2009 depending on the category of raw material and the legal requirements. The high temperatures for the heat treatment step allows sufficient heat to penetrate the relatively large feed stock, which ultimately results in fluidification of the feed stock and a higher fat yield after separation of the fat.

The treatment step is followed by a comminution step of comminuting the feed stock to obtain fragments with a size of 10 mm or less, such as 8 mm or less, preferably 6 mm or less. Due to the very small size of the feedstock fragments, sufficient fat can be removed from the tissue of the fragments, resulting in a high final fat yield. By comminuting the feed stock, a suspension is obtained comprising a fat phase, an aqueous protein phase and a solid phase, wherein the solid phase comprises for example undissolved minerals such as calcium and phosphates. The three-phase system formed under these reaction conditions has surprisingly sharp phase interfaces with no intermediate phases, which enables simple and efficient separation. As a result, it is possible to separate the three phases from one another very well and obtain their components in high purity and with maximum yield. The comminution step is followed by a separation step in which the fat phase is separated from the three-phase system, thereby obtaining a fat fraction.

According to the invention, the method comprises a crushing step before heating the feed stock to decrease the feed stock in size to obtain feed stock fragments with a size of 50 mm or less, such as 20 mm or less. Crushing of the feedstock advantageously allows the heat to penetrate the feed stock more efficiently, which ultimately results in the fluidification of the feed stock and a higher fat yield after separation of the fat. Crushing of the feed stock can be achieved by for example one or more of crushing, shredding or pre-breaking.

Known prior art methods such as disclosed in EP2612558 perform a crushing step followed by a sterilization step, during which three phases are obtained that can be separated. The method according the present invention comprises a heating step followed by a comminution step, wherein the feed stock is comminuted to obtain feed stock fragments with a size of less than 10 mm, such as 8 mm or less, preferably 6 mm or less. The heating step is preceded by a crushing step. It has surprisingly been found by the inventors that this aspect of the invention, i.e. the comminution step after a heat treatment step, achieves better results in terms of fat yield (wherein the term 'fat yield' relates to the total amount of fat in the obtained fraction after separation relative to the total amount of fat present in the feed stock). Where prior art methods, such as disclosed in GB917638 and EP2612558, obtained a fat yield of respectively 94 and 91%, the method according to the present invention results in a fat yield of at least 95%, preferably at least 96%, more preferably 98%. The three-phase system with the sharp interface may enable the efficient separation of the three phases, thereby increasing the yield and purity of the separated phases. In addition, the free fatty acid (FFA) content (wherein the term 'FFA content' relates to the amount of FFA relative to the total weight of the obtained fat fraction after separation) can be relatively low compared to a fat separation process in which the heat treatment is performed after crushing of the feed stock, and wherein no comminution step is present after heating the feed stock. FFA are considered to be the result of hydrolysis and fat or oil oxidation reactions that occur at the surface of the feed stock fragments during heating. As the feed stock fragments are still relatively large during heating in the method according to the present invention, less FFA are formed while the fat is liquefied and freed from the tissue in which it was enclosed.

Animal products that can be processed with the method according to the invention include, but are not limited to, Category 1, 2 or 3 animal by-products according to the EU regulation (EC) No. 1069/2009.

In an embodiment of the invention wherein Category 1 and/or 2 material is being handled, the treatment step b) comprises heating the feedstock to a temperature of at least 133°C and subjecting the feed stock to an absolute pressure of at least 3 bar for a duration of at least 20 minutes. These sterilization conditions are in line with EU Regulation (EC) No. 1069/2009. The treatment step b) can be performed in for example an autoclave.

In a preferred embodiment of the invention, the dry matter content of the feed stock as provided in step a) is in the range of 20-40%, preferably 28-33%. The term 'dry matter content' relates to the amount of dry matter in a product relative to the total weight of the product. The dry matter content is high compared to prior art processes, in which large amounts of water are required to properly clean the feed stock or to sufficiently extract proteins from the feed stock.

If the feed stock of animal by-products comprises a dry matter content above the preferred ranges, water can be added to the feed stock. Water can be added e.g. in step a) during the supply of the feed stock, or in step b) when the feed stock is heat-treated with steam, or a combination thereof. In embodiments, the method further comprises a step of adding water preferably before treatment step b), to the feed stock to obtain a dry matter content of 20-40%, preferably 28-33%.

The heat treatment in step (b) of the method can be directly or indirectly, but is preferably with steam.

In an embodiment of the invention, comminution of the feed stock of animal by-products in comminution step c) is achieved by e.g. one or more of grinding, pulverizing, extruding, hammer milling or ball milling.

In an embodiment of the invention, the use of a second heating step is obsolete and can be omitted. Therefore, the comminuted product can be fed directly to the separation step without additional heating.

In an embodiment of the invention, separation step d) comprises simultaneous separation of the three phases in the three-phase system, comprising the fat phase, aqueous protein phase and the solid phase. The sharp interfaces of the three phases enable efficient separation, resulting in high yields of the obtained fat fraction, aqueous protein fraction and solid fraction. Simultaneous separation of the three phases can be achieved by e.g. one or more of a three-phase separator or a three-phase decanting centrifuge, preferably a three-phase decanter centrifuge.

In an alternative embodiment of the invention, separation step d) comprises separating the solid phase from the three-phase system, thereby obtaining a solid fraction and a liquid fraction, wherein the liquid fraction comprises the fat phase and the aqueous protein phase, and subsequently separating the fat phase from the aqueous protein phase to obtain a fat fraction and an aqueous protein fraction. Separation of the solid phase from the liquid phase is achieved by e.g. centrifuging or decanting, preferably by decanting. Separation of the liquid phase to obtain a fat fraction and an aqueous protein fraction is achieved by e.g. liquid separation, centrifuging, decanting, preferably liquid separation.

The fat fraction obtained in separation step d) can be used in a variety of products, depending on the animal by-product category in which the feed stock was categorized. For a feed stock of animal by-products in Category 1, 2 and 3, the obtained fat can be used as a fuel, such as biodiesel. For a feed stock of animal by-products in Category 3, the obtained fat can be used in e.g. feed or for technical purposes.

In an embodiment of the invention, the aqueous protein fraction obtained in separation step d) is further subjected to a treatment to remove water from the aqueous protein phase, for example by one or more of evaporation, pressing, filtering, straining, to obtain a protein concentrate with a water content of not more than 40-70 wt.%. The concentrate obtained in this way is short to medium term stable for storage.

To produce high-quality powdered amino acid-peptide products, the concentrate can also be dried to a residual water content of 2-8% by weight. Preferred methods for drying include spray drying or roller drying, and in the case of Category 1 or 2 material, blending of the concentrate into the solid phase and homogenization in a mixer, so that no segregation occurs before or during the first track inside the contact dryer.

In an embodiment of the invention, the wastewater that is removed from the aqueous protein phase is further subjected to a treatment in for example a wastewater treatment plant to purify the wastewater. The purified wastewater can optionally be reused in the method according to the invention, for example by adding the purified waste water to the feed stock in supply step a) or in the form of steam to heat the feed stock in treatment step b).

In an embodiment of the invention, the solid phase obtained in separation step d) can be further subjected to a treatment to remove water from the solid fraction for example by one or more of heating, lyophilization, pressing, filtering, straining, and pressing. The solid fraction can then be e.g. sieved and/or ground to obtain a dry product or burned in a special flameless burner.

In an alternative embodiment of the invention, the protein concentrate is mixed back into the solid phase, and both streams are together dried, comminuted or sieved, or a combination thereof, to obtain a dry product. For a feed stock of animal by-products in Category 2, the obtained dry product can be used in e.g. fertilizer, and for a feed stock of Category 3 animal by-products the obtained dry product can be used in e.g. feed.

In a preferred embodiment of the invention, the method as taught herein and/or the individual steps therein is preferably performed as a semi-continuous or continuous process.

### EXAMPLES

This experimental section shows the method for extracting fat from animal by-products according to the invention compared to prior art processes. As such, it highlights how the inclusion of a previously unknown step, i.e. comminution of the heat-treated feed stock, is particularly advantageous for the obtained fat yield.

### Method

A feed stock of 4000 kg Category 3 animal by-products is provided for the experiments. The composition of the feed stock is provided in Table 1. Equal portions of 1000 kg/each are used for Examples 1 and 2 according to the invention and Comparative examples 1 and 2.

**Table 1. The composition of a mixture of 3000 kg Category 3 animal by products.**

| Component | Share (%) | Amount (kg) |
|---|---|---|
| Protein | 16,9 | 676 |
| Fat | 19,0 | 760 |
| Inorganic compounds | 10,6 | 424 |
| Water | 53,5 | 2140 |
| **Total** | **100** | **4000** |

### Example 1

1000 kg of raw material of animal origin with a composition as shown in Table 1 is mixed with 350 kg water to obtain a dry matter content of 33,6%. The mixture is crushed to obtain feed stock fragments with a size of approximately 50 mm and subsequently heated in an autoclave to 100°C for 20 minutes. The feed stock is cooled and fed to a ball mill in which the feed stock is comminuted until fragments of approximately 6 - 10 mm are obtained. During cooling of the comminuted fragments, three phases are obtained: a fat phase, an aqueous protein phase and a solid phase. The solid phase is separated from the liquid phase by decanting the mixture. The aqueous protein phase is then separated from the liquid fat phase by means of a separator to obtain the fat phase.

### Example 2

1000 kg of raw material of animal origin with a composition as shown in Table 1 is mixed with 350 kg water to obtain a dry matter content of 33,6%. The mixture is crushed to obtain feed stock fragments with a size of approximately 50 mm and subsequently sterilized in an autoclave at a temperature of 135°C and a pressure of 3,1 bar for 21 minutes. The feed stock is cooled and fed to a ball mill in which the feed stock is comminuted until fragments of approximately 6 - 10 mm are obtained. During cooling of the comminuted fragments, three phases are obtained: a fat phase, an aqueous protein phase and a solid phase. The solid phase is separated from the liquid phase by decanting the mixture. The aqueous protein phase is then separated from the liquid fat phase by means of a separator to obtain the fat phase.

### Comparative Example 1

1000 kg of raw material of animal origin with a composition as shown in Table 1 is mixed with 350 kg water to obtain a dry matter content of 33,6%. The mixture is then crushed to obtain fragments with a size of approximately 18 mm. This mixture is transferred to an autoclave in which the components are mixed with a mechanical stirrer and heated to 160°C. The mixture is maintained at this temperature for 2 hours and afterwards cooled to 100 °C. The solid phase is separated from the liquid phase by decanting the mixture. The aqueous protein phase is then separated from the liquid fat phase by means of a separator to obtain the fat phase.

### Comparative Example 2

1000 kg of raw material of animal origin with a composition as shown in Table 1 is crushed and sterilized in an autoclave at 135°C at a pressure of 3,1 bar for 21 minutes. The mixture is dried after sterilization and then pressed to obtain a fat fraction.

### Yield determination

To determine the fat yield, the flows of fat before and after the experiments are recorded separately for a standardized amount of 1000 kg of raw material. The fat yield is determined using conventional analytical methods for Examples 1 and 2 and Comparative Examples 1.

### BRIEF DESCRIPTION OF THE DRAWING

The invention is further illustrated by the attached drawing, wherein:

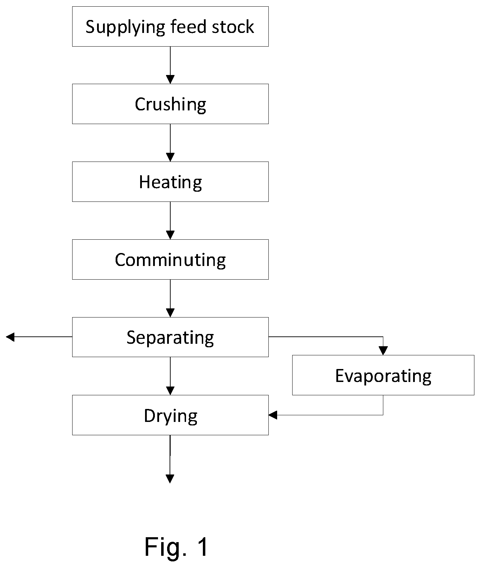

Fig. 1 is a schematic diagram of the method for separating fat from animal by-products according to an embodiment of the invention.

### DETAILED DESCRIPTION OF THE DRAWINGS

The method for separating fat from animal by-products according to an embodiment of the invention shown in Fig. 1.

The method for separating fat from a feed stock of animal by-products comprises a first step of supplying a feed stock of animal by-products. The water content of the feedstock is in the range of 45-70%. Should the water content of the feed stock of animal by-products be less, water can optionally be added. The feed stock can optionally be crushed to obtain fragments with a size of 50 mm or less. This step is not necessary if the feed stock already comprises fragments with a size of 50 mm or less. After crushing, the feed stock is heated in for example an autoclave. In the case that a feed stock of Category 1 or 2 materials is being processed, the feed stock is treated by heating the feed stock to a temperature of at least 133 °C while also subjecting the feed stock to a pressure of at least 3 bar for at least 20 minutes according to EU Regulation (EC) No. 1069/2009. After the heat treatment or sterilization, the feed stock is comminuted to obtain fragments of 10 mm or less. Comminution is achieved by using e.g. a ball mill. During comminuting a suspension is obtained comprising three phases: a fat phase, an aqueous protein phase and a solid phase. As a next step, the phases from the suspension are separated by using for example a three-phase decanter, in which the three phases are simultaneously separated to obtain a fat fraction, an aqueous protein fraction and a solid fraction. The obtained fat fraction ideally has a high fat yield of 95% and a low FFA content. The aqueous protein fraction can optionally be further treated by evaporating water to form a protein concentrate. The protein concentrate can either be used in products, such as feed or fertilizer, or it can be mixed with the solid fraction, dried and sieved to obtain a dry product, which can also optionally be used in e.g. feed or fertilizer.

## Claims

1. Method for the separation of fat from animal by-products, comprising
a supply step a) of providing a feed stock of animal by-products,
a crushing step of crushing the feed stock to obtain feed stock fragments with a size of 50 mm or less;
a treatment step b) of sterilizing the crushed feed stock, wherein the feed stock has a dry matter content of 20-40% and wherein, during sterilization, the internal temperature of the feed stock fragments reaches a minimum of 95 °C;
a comminution step c) of comminuting the sterilized feed stock, wherein the feed stock is reduced in size to obtain fragments with a size of 10 mm or less, and wherein a three-phase system, comprising a fat phase, an aqueous protein phase and a solid phase, is obtained, and
a separation step d) of separating the fat phase from the three-phase system obtained in comminution step c).

2. Method according to claim 1, wherein the three-phase system obtained in comminution step c) is a suspension comprising a fat phase, an aqueous protein phase and a solid phase.

3. Method according to claim 1 or 2, wherein in treatment step b) the feed stock is heated to 100°C.

4. Method according to any one of the preceding claims, wherein treatment step b) comprises sterilization of the feed stock, which comprises subjecting the feed stock to a temperature of at least 133 °C and a pressure of at least 3 bar for a duration of at least 20 minutes.

5. Method according to any one of the preceding claims, wherein the method further comprises, before treatment step b), a crushing step of crushing the feed stock to obtain feed stock fragments with a size of 20 mm or less.

6. Method according to any one of the preceding claims, wherein in comminution step c) the feed stock is comminuted to obtain feed stock fragments with a size of 8 mm or less, preferably 6 mm or less.

7. Method according to any one of the preceding claims, wherein in comminution step c) comminution of the feed stock is achieved by grinding, pulverizing, extruding, hammer milling or ball milling, or a combination thereof.

8. Method according to any one of the preceding claims, wherein in separation step d), the fat phase, the aqueous protein phase and the solid phase are
simultaneously separated to obtain a fat fraction, an aqueous protein fraction and a solid fraction, or
the solid phase is separated from the three-phase system, thereby obtaining a solid fraction and a liquid fraction, wherein the liquid fraction comprises the fat phase and the aqueous protein phase, and the fat phase is subsequently separated from the aqueous protein phase to obtain a fat fraction and an aqueous protein fraction.

9. Method according to claim 8, wherein in separation step d) separation of the three-phase system is achieved by a three-phase separator or a three-phase decanting centrifuge, or a combination thereof.

10. Method according to any of the preceding claims, wherein the separated aqueous protein fraction is further subjected to a treatment to remove the water, preferably by evaporation, pressing, filtering, straining, or a combination thereof, to obtain a protein concentrate comprising a water content of 40-70%.

11. Method according to claim 10, wherein the removed water is treated in a waste water treatment plant and optionally reused in supply step a) or treatment step b).

12. Method according to any one of the preceding claims, wherein steps a) to d) are performed in a semi-continuous or a continuous process.

## Patentansprüche

1. Verfahren zum Abtrennen von Fett aus tierischen Nebenprodukten, umfassend
einen Zuführschritt a) der Bereitstellung eines Ausgangsmaterials von tierischen Nebenprodukten,
einen Zerkleinerungsschritt des Zerkleinerns des Ausgangsmaterials, um Ausgangsmaterialfragmente mit einer Größe von 50 mm oder weniger zu erhalten;
einen Behandlungsschritt b) des Sterilisierens des zerkleinerten Ausgangsmaterials, wobei das Ausgangsmaterial einen Trockenmassegehalt von 20-40 % aufweist und wobei während der Sterilisation die Innentemperatur der Ausgangsmaterialfragmente wenigstens 95 °C erreicht;
einen Zerkleinerungsschritt c) des Zerkleinerns des sterilisierten Ausgangsmaterials, wobei das Ausgangsmaterial größenreduziert wird, um Fragmente mit einer Größe von 10 mm oder weniger zu erhalten, und wobei ein Dreiphasensystem, umfassend eine Fettphase, eine wässrige Proteinphase und eine feste Phase, erhalten wird, und
einen Trennschritt d) der Abtrennung der Fettphase aus dem bei dem Zerkleinerungsschritt c) erhaltenen Dreiphasensystem.

2. Verfahren nach Anspruch 1, wobei das bei dem Zerkleinerungsschritt c) erhaltene Dreiphasensystem eine Suspension umfassend eine Fettphase, eine wässrige Proteinphase und eine feste Phase ist.

3. Verfahren nach Anspruch 1 oder 2, wobei bei dem Behandlungsschritt b) das Ausgangsmaterial auf 100 °C erhitzt wird.

4. Verfahren nach einem der vorstehenden Ansprüche, wobei der Behandlungsschritt b) Sterilisation des Ausgangsmaterials umfasst, umfassend Unterwerfen des Ausgangsmaterials an eine Temperatur von wenigstens 133 °C und einen Druck von wenigstens 3 bar für eine Dauer von wenigstens 20 Minuten.

5. Verfahren nach einem der vorstehenden Ansprüche, wobei das Verfahren vor Behandlungsschritt b) ferner einen Zerkleinerungsschritt des Zerkleinerns des Ausgangsmaterials umfasst, um Ausgangsmaterialfragmente mit einer Größe von 20 mm oder weniger zu erhalten.

6. Verfahren nach einem der vorstehenden Ansprüche, wobei bei dem Zerkleinerungsschritt c) das Ausgangsmaterial zerkleinert wird, um Ausgangsmaterialfragmente mit einer Größe von 8 mm oder weniger, vorzugsweise 6 mm oder weniger, zu erhalten.

7. Verfahren nach einem der vorstehenden Ansprüche, wobei bei dem Zerkleinerungsschritt c) Zerkleinerung des Ausgangsmaterials durch Mahlen, Pulverisieren, Extrudieren, Hammermahlen oder Kugelmahlen oder eine Kombination davon erzielt wird.

8. Verfahren nach einem der vorstehenden Ansprüche, wobei bei dem Trennschritt d) die Fettphase, die wässrige Proteinphase und die feste Phase
gleichzeitig getrennt werden, um eine Fettfraktion, eine wässrige Proteinfraktion und eine feste Fraktion zu erhalten, oder
die feste Phase aus dem Dreiphasensystem abgetrennt wird, um eine feste Fraktion und eine flüssige Fraktion zu erhalten, wobei die flüssige Fraktion die Fettphase und die wässrige Proteinphase umfasst, und die Fettphase anschließend von der wässrigen Proteinphase getrennt wird, um eine Fettfraktion und eine wässrige Proteinfraktion zu erhalten.

9. Verfahren nach Anspruch 8, wobei bei dem Trennschritt d) Trennung des Dreiphasensystems durch einen Dreiphasenseparator oder eine Dreiphasen-Dekantierzentrifuge oder eine Kombination davon erzielt wird.

10. Verfahren nach einem der vorstehenden Ansprüche, wobei die abgetrennte wässrige Proteinfraktion ferner einer Behandlung zum Entfernen des Wassers unterzogen wird, vorzugsweise durch Verdampfen, Pressen, Filtrieren, Spannen oder eine Kombination davon, um ein Proteinkonzentrat, das einen Wassergehalt von 40-70 % umfasst, zu erhalten.

11. Verfahren nach Anspruch 10, wobei das entfernte Wasser in einer Abwasserbehandlungsanlage behandelt und gegebenenfalls bei dem Zuführschritt a) oder dem Behandlungsschritt b) wiederverwendet wird.

12. Verfahren nach einem der vorstehenden Ansprüche, wobei die Schritte a) bis d) in einem halbkontinuierlichen oder einem kontinuierlichen Verfahren durchgeführt werden.

## Revendications

1. Procédé pour la séparation de graisse à partir de sous-produits animaux, comprenant
une étape de fourniture a) consistant à fournir une matière première de sous-produits animaux,
une étape de concassage consistant à concasser la matière première pour obtenir des fragments de matière première d'une taille de 50 mm ou moins ;
une étape de traitement b) consistant à stériliser la matière première concassée, dans lequel la matière première a une teneur en matière sèche de 20 à 40 % et dans lequel, pendant la stérilisation, la température interne des fragments de matière première atteint un minimum de 95 °C ;
une étape de broyage c) consistant à broyer la matière première stérilisée, dans lequel la matière première est réduite en taille pour obtenir des fragments d'une taille de 10 mm ou moins, et dans lequel un système triphasique, comprenant une phase grasse, une phase protéique aqueuse et une phase solide, est obtenu, et
une étape de séparation d) de la phase grasse du système triphasique obtenu dans l'étape de broyage c).

2. Procédé selon la revendication 1, dans lequel le système triphasique obtenu dans l'étape de broyage c) est une suspension comprenant une phase grasse, une phase protéique aqueuse et une phase solide.

3. Procédé selon la revendication 1 ou 2, dans lequel, dans l'étape de traitement b), la matière première est chauffée jusqu'à 100 °C.

4. Procédé selon l'une quelconque des revendications précédentes, dans lequel l'étape de traitement b) comprend la stérilisation de la matière première, qui comprend la soumission de la matière première à une température d'au moins 133 °C et une pression d'au moins 3 bars pendant une durée d'au moins 20 minutes.

5. Procédé selon l'une quelconque des revendications précédentes, dans lequel le procédé comprend en outre, avant l'étape de traitement b), une étape de concassage consistant à concasser la matière première pour obtenir des fragments de matière première ayant une taille de 20 mm ou moins.

6. Procédé selon l'une quelconque des revendications précédentes, dans lequel, dans l'étape de broyage c), la matière première est broyée pour obtenir des fragments de matière première ayant une taille de 8 mm ou moins, de préférence de 6 mm ou moins.

7. Procédé selon l'une quelconque des revendications précédentes, dans lequel, dans l'étape de broyage c), le broyage de la matière première est réalisé par broyage, pulvérisation, extrusion, broyage au marteau ou broyage à billes, ou une combinaison de ceux-ci.

8. Procédé selon l'une quelconque des revendications précédentes, dans lequel, dans l'étape de séparation d), la phase grasse, la phase protéique aqueuse et la phase solide sont
séparées simultanément pour obtenir une fraction grasse, une fraction protéique aqueuse et une fraction solide, ou
la phase solide est séparée du système triphasique, ce qui permet d'obtenir une fraction solide et une fraction liquide, la fraction liquide comprenant la phase grasse et la phase protéique aqueuse, et la phase grasse est ensuite séparée de la phase protéique aqueuse pour obtenir une fraction grasse et une fraction protéique aqueuse.

9. Procédé selon la revendication 8, dans lequel, dans l'étape de séparation d), la séparation du système triphasique est réalisée par un séparateur triphasique ou une centrifugeuse à décantation triphasique, ou une combinaison de ceux-ci.

10. Procédé selon l'une quelconque des revendications précédentes, dans lequel la fraction protéique aqueuse séparée est en outre soumise à un traitement pour éliminer l'eau, de préférence par évaporation, pressage, filtration, filtrage ou une combinaison de ceux-ci, pour obtenir un concentré protéique comprenant une teneur en eau de 40-70 %.

11. Procédé selon la revendication 10, dans lequel l'eau éliminée est traitée dans une installation de traitement des eaux usées et éventuellement réutilisée dans l'étape de fourniture a) ou l'étape de traitement b).

12. Procédé selon l'une quelconque des revendications précédentes, dans lequel les étapes a) à d) sont effectuées dans un processus semi-continu ou un processus continu.
